# EUROPEAN PATENT SPECIFICATION

(11) **EP 4 385 786 B1**
(45) Date of publication and mention of the grant of the patent: **07.10.2026**
(21) Application number: 22214326.5
(22) Date of filing: 16.12.2022
(51) Int. Cl.: B60K 26/02

(54) **ACCELERATOR PEDAL BRACKET ASSEMBLY FOR A VEHICLE, ACCELERATING PEDAL ASSEMBLY FOR A VEHICLE, VEHICLE COMPRISNG ACCELERATING PEDAL ASSEMBLY WITH ACCELERATOR PEDAL BRACKET ASSEMBLY AND METHOD FOR PROTECTING A DRIVER WITH ACCELERATO PEDAL BRACKET ASSEMBLY**
FAHRPEDALKONSOLENANORDNUNG FÜR EIN FAHRZEUG, FAHRPEDALANORDNUNG FÜR EIN FAHRZEUG, FAHRPEDALANORDNUNG UND VERFAHREN ZUM SCHUTZ EINES FAHRERS
PÉDALIER D'ACCÉLÉRATION POUR UN VÉHICULE, VÉHICULE COMPRENANT UN PÉDALIER D'ACCÉLÉRATION

(43) Date of publication of application: 19.06.2024
(73) Proprietor: Volvo Car Corporation, 405 31 Göteborg (SE)
(72) Inventor: KAPOCS, Marcel, 40531 Göteborg (SE); LARSEN, Mickael, 40531 Göteborg (SE)
(74) Representative: Kransell & Wennborg KB

(56) References cited:
- DE-A1- 10 306 103
- DE-A1- 102008 046 652
- DE-A1- 102011 051 406
- US-A1- 2009 293 666

## Description

The present disclosure relates to an accelerator pedal bracket assembly for a vehicle for protecting a driver during a crash, an accelerating pedal assembly for a vehicle for protecting a driver during a crash, a vehicle comprising an accelerator pedal bracket assembly, the use of an accelerator pedal bracket assembly for a vehicle and a method for protecting a driver by means of an accelerator pedal bracket assembly.

In a belted or unbelted vehicle collision accident, the driver often still has his foot placed on a pedal of the vehicle. The G-force in such a collision may exert a high impact on the pedal and the foot thereon. Statistically, the G-force exerted on the foot of the driver by such a collision may be as high as about 3500 N. However, at this force level, the pedal of the vehicle may not be completely damaged or deformed, so that the force pulse on the foot placed thereon may not be absorbed or reduced enough and thereby cause a severe injury of the driver during the collision. Moreover, the pedal may be damaged and fall apart into small pieces, resulting in further injuring the foot of the driver placed on the pedal. Hence, a sufficient protection system needs to be developed for the driving system of the vehicle, in order to keep the risk and the extent of an injury of the driver caused by the vehicle collision at a minimum. DE 103 06 103 A1 describes an arrangement of a pedal mechanism bearing block in a motor vehicle. The arrangement comprises a bearing block base plate, which is fastened to the bulkhead, and an accelerator pedal module stage part (FPM stage part) formed on the bearing block base plate, on which an accelerator pedal module with an accelerator pedal protruding into the foot space is mountable. The FPM stage part is formed on the bearing block base plate laterally below and protruding into the foot space on the bearing block base plate via at least one connecting section. US 2009/293666A1 describes an organ type accelerator pedal apparatus which comprises a pedal, an upper portion of which is pivotally coupled to a lower portion of a pedal arm, and a pedal bracket, which is pivotally connected with a lower portion of the pedal and has one or more fitting protrusions, guide protrusions and fitting holes. DE 10 2011 051406 A1 describes a vehicle pedal unit comprising a base element, a pedal element that is pivotally attached to the base element, a release point for releasing at least part of the pedal element in the event of a crash, and an energy absorbing element. DE 10 2008 046652 A1 describes a foot pedal on a vehicle comprising a pedal plate as a footplate and a bearing block fixed to the vehicle body, on which the pedal plate is pivotably articulated. At least one damping element is assigned to the foot pedal and can be subjected to force and deformed to absorb energy as a result of a crash event.

It is an objective of the present disclosure to provide an improved pedal assembly for a vehicle for safety protection by a collision.

The problem is at least partially solved or alleviated by the subject matter of the independent claims of the present disclosure, wherein further examples are incorporated in the dependent claims.

According to a first aspect, there is provided an accelerator pedal assembly for a vehicle for protecting a driver during a crash. The accelerator pedal assembly comprises a first bracket portion, which comprises a deformation element and a protruding surface. The protruding surface is configured to support an accelerator pedal. The deformation element is arranged in a deformation zone on the protruding surface and configured to be deformed during the crash and to lift the accelerator pedal up by a predefined height.

The deformation element may be designed to be one or more recesses, slits or in combination, which may be formed on the protruding surface to facilitate the deformation in the deformation zone when compared to the zone on the protruding surface other than the deformation zone. Alternatively, the deformation element may be designed to be a protrusion on the protruding surface. Alternatively, the deformation element may be a resilient element that may be designed to lift the accelerator pedal up by means of the spring force of the resilient element during the crash.

By deforming the deformation element of the first bracket portion of the accelerator pedal bracket assembly, the high initial pulse of the collision, which may be for example around 3500 N on the foot, may be absorbed or brought down to a lower level and the injury caused by the crash may be prevented or at least kept at a minimum. Furthermore, by deforming the deformation element, the damage of the accelerator pedal may be minimized and the accelerator pedal may not fall into loose parts.

The first bracket portion further comprises a base that comprises at least one through hole and at least one retention element. The at least one through hole is configured to secure the accelerator pedal to a floor panel of the vehicle by means of at least one fixing element.

The at least one retention element is arranged at the at least one through hole.

The deformation elements and/or the retention elements may be cost-efficiently formed on the protruding surface of the pedal bracket, so that the optimized protection for the foot of the driver may be achieved during the crash without modifying the accelerator pedal itself.

In an example, the at least one retention element may comprise at least one sliding slot, which may be configured to elongate the at least one through hole in a first direction. The at least one sliding slot may be configured to allow the at least one fixing element sliding from the at least one through hole into the at least one sliding slot during the crash.

In an example, the at least one retention element may be configured to elongate the at least one through hole in parallel to each other. The at least one sliding slot may be configured to allow the at least one fixing element sliding from the at least one through hole into the at least one sliding slot in the same first direction during the crash.

The lateral translational movement, in addition to the vertical lifting up movement, of the accelerator pedal bracket assembly may further absorb and reduce the force exerted on the accelerator pedal and the foot thereon during the crash, resulting in minimized foot injury.

In an example, the at least one retention element may be configured to elongate the at least one through hole antiparallel to each other. Additionally, the at least one sliding slot may be configured to allow the at least one sliding slot sliding in opposite directions and thereby to allow the first bracket portion twisting by a predefined angle during the crash.

Similarly, the lateral twisting movement, in addition to the vertical lifting up movement, of the accelerator pedal bracket assembly may further absorb and reduce the force exerted on the accelerator pedal and the foot thereon during the crash, resulting in minimized foot injury.

In an example, the at least one retention element may further comprise at least one pivot element, which may be configured to pivot about the at least one through hole by the predefined angle during the crash.

Similarly, the lateral pivot or rotation movement, in addition to the vertical lifting up movement, of the accelerator pedal bracket assembly may further absorb and reduce the force exerted on the accelerator pedal and the foot thereon during the crash, resulting in minimized foot injury.

In an example, the at least one retention element may be configured to allow the sliding slot sliding into the sliding slot during the crash. Additionally, the at least one retention element may be configured to allow the pivot element pivoting by the predefined angle and thereby allow the first bracket portion twisting by the predefined angle during the crash.

In an example, the predefined height may be 1 mm to 2 mm.

In an example, the accelerator pedal bracket assembly may further comprise a second bracket portion, which may comprise the through hole and be configured to be at least partially overlaid by the first bracket portion.

The first bracket portion may be designed to be movable independently from the second bracket portion, so that the sliding slots of the first bracket portion may be configured to allow the respective fixing elements to slide or move in opposite directions.

In an example, the second bracket portion may be secured to the first bracket portion.

Alternatively or additionally, the second bracket portion and the first bracket portion may be designed to be one piece.

The second bracket portion and the first bracket portion may form an integral piece of the accelerator pedal bracket, so that the accelerator pedal bracket may be lifted up, move or rotate as a whole piece.

In an example, the second bracket portion may further comprise the retention element, which may be the sliding slot.

The sliding slot of the second bracket portion may be configured to elongate the through hole of the second bracket portion in parallel to the at least one retention element of the first bracket portion, and thereby to allow the fixing element of the second bracket portion sliding from the through hole into the sliding slot in the same first direction as the at least one fixing element of the first bracket portion during the crash.

Alternatively, the sliding slot of the second bracket portion may be configured to elongate the through hole of the second bracket portion in a second direction different from the first direction, and to allow the fixing element of the second bracket portion sliding in the second direction, thereby to allow the second bracket portion twisting by the predefined angle, when the first bracket portion twisting by the predefined angle during the crash.

According to the second aspect, there is provided an accelerating pedal assembly for a vehicle for protecting a driver during a crash. The accelerating pedal assembly comprises an accelerator pedal and an accelerator pedal bracket assembly according to the present disclosure. The accelerator pedal bracket assembly is configured to secure the accelerator pedal to a floor panel of the vehicle and comprises a deformation element, which is configured to be deformed during the crash, so that the accelerator pedal and a foot of the driver are lifted up by a predefined height.

Alternatively or additionally, the accelerator pedal bracket assembly may further comprise a first bracket portion, which may comprise at least one retention element comprising at least one sliding slot and/or at least one pivot element. The at least one sliding slot may be configured to allow the at least one fixing element, which may be configured to be arranged at the at least one through hole of the first bracket portion and attach the accelerator pedal to the floor panel, sliding from the at least one through hole into the at least one sliding slot or twisting by a predefined angle during the crash. The at least one pivot element may be configured to pivot about the at least one through hole by a predefined angle.

The accelerator pedal bracket assembly may be arranged between the accelerator pedal and the floor panel of the vehicle, so that the accelerator pedal may be designed to be a hanging pedal. This may advantageously allow the accelerator pedal and the foot of the driver placed on the accelerator pedal sliding off during a crash, so that the foot injury may be prevented or at least minimized, since the pulse of the crash on foot may fully or at least partly absorbed by the movable hanging accelerator pedal and the foot may be moved to a relatively stable and safe position during the crash.

Further, the accelerator pedal bracket assembly, the accelerator pedal and the foot may twist from a first position to a second position, so that the foot may be distant to the side panel of the vehicle with a predefined distance. As such, the foot may be prevented from a further injury caused by the side panel during the crash. A maximum predefined distance may be provided between the accelerator pedal and the side panel for preventing the foot from slipping off the accelerator pedal at the right side of the accelerator pedal. Moreover, the accelerator pedal may be configured to twist to guide the foot to the right side of the accelerator pedal for preventing the foot from slipping off the accelerator pedal at the left side of the accelerator pedal.

According to a third aspect, there is provided the use of an accelerator pedal bracket assembly according to the present disclosure for a vehicle according to the present disclosure for absorbing a crash impact and preventing a foot injury of a driver during a crash.

According to a fourth aspect, there is provided a vehicle comprising an accelerating pedal assembly according to the present disclosure, which comprises an accelerator pedal bracket assembly according to the present disclosure.

The accelerating pedal assembly and the accelerator pedal bracket assembly may be securely mounted to and/or integrated in the vehicle.

According to a fifth aspect, there is provided a method for protecting a driver during a crash for a vehicle by means of an accelerator pedal bracket assembly according to the present disclosure. The method comprises the following steps: first, providing a first bracket portion that comprises a deformation element and a protruding surface, and supporting an accelerator pedal by means of the protruding surface; subsequently, deforming the deformation element which is arranged in a deformation zone on the protruding surface during the crash, in order to lift the accelerator pedal up by a predefined height; finally, sliding or twisting the first bracket portion during the crash by means of at least one retention element, which comprises at least one sliding slot and/or at least one pivot element.

Further, there may be provided a computer program element for an accelerator pedal bracket assembly, which, when being executed by a processing element of a vehicle, is adapted to perform the method steps of the fifth aspect.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows schematically an example of an accelerator pedal bracket assembly according to the present disclosure.
- Fig. 2: shows schematically an example of an accelerator pedal bracket assembly according to the present disclosure.
- Fig. 3a: shows schematically an example of an accelerator pedal bracket assembly according to the present disclosure.
- Fig. 3b: shows schematically an example of an accelerator pedal bracket assembly according to the present disclosure.
- Fig. 4a: shows schematically a perspective view of an example of an accelerating pedal assembly according to the present disclosure.
- Fig. 4b: shows schematically a perspective view of an example of an accelerating pedal assembly according to the present disclosure.
- Fig. 4c: shows schematically a perspective view of an example of an accelerating pedal assembly according to the present disclosure.
- Fig. 5a: shows schematically a side view of an example of an accelerating pedal assembly according to the present disclosure.
- Fig. 5b: shows schematically a side view of an example of an accelerating pedal assembly according to the present disclosure.
- Fig. 6: shows schematically an example of a vehicle according to the present disclosure.
- Fig. 7: shows schematically a flow chart illustrating a method for soundproofing in a vehicle by means of an audio controlling system according to the present disclosure.

The figures are merely schematic representations and serve only to illustrate examples of the disclosure. Identical or equivalent elements are in principle provided with the same reference signs.

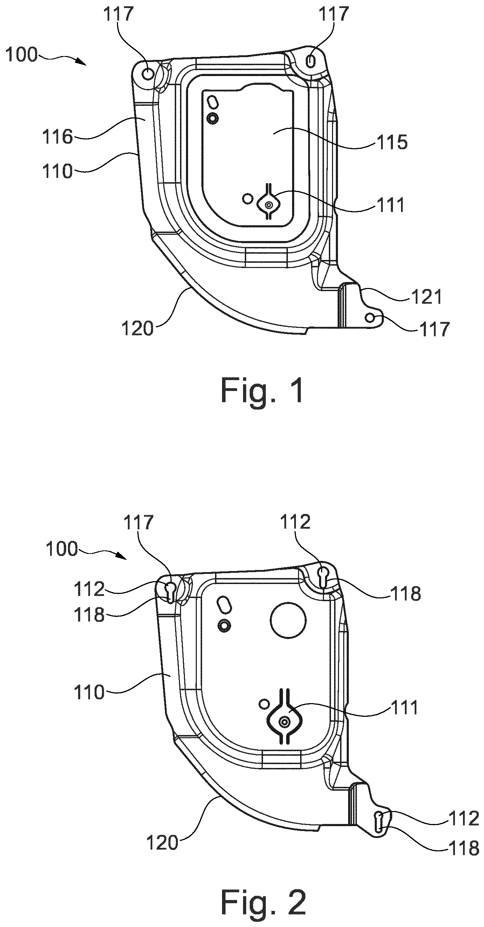

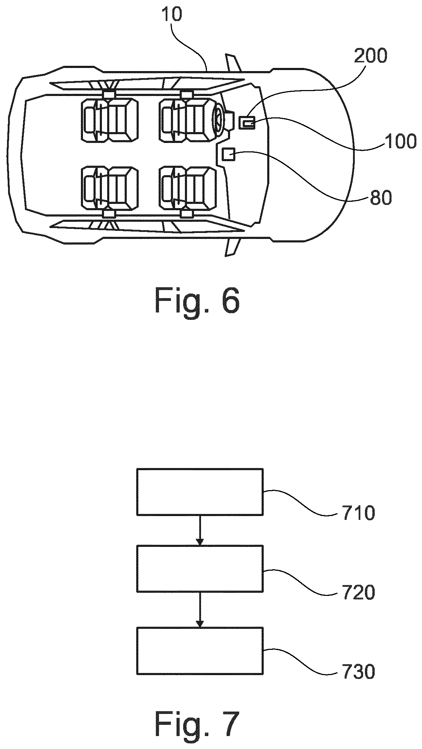

Fig. 1 shows an accelerator pedal bracket assembly 100 for a vehicle 10, which is also shown in Fig. 6, for protecting a driver 50 during a crash. The accelerator pedal bracket assembly 100 comprises a first bracket portion 110 and a second bracket portion 120.

The first bracket portion 110 comprises a deformation element 111 and a protruding surface 115. The deformation element 111 is arranged in a deformation zone 111a on the protruding surface 115. The deformation element 111 may be designed to be one or more recesses, slits or in combination, which may be formed on the protruding surface 115 to facilitate the deformation in the deformation zone 111a when compared to the zone of the protruding surface 115 other than the deformation zone 111a.

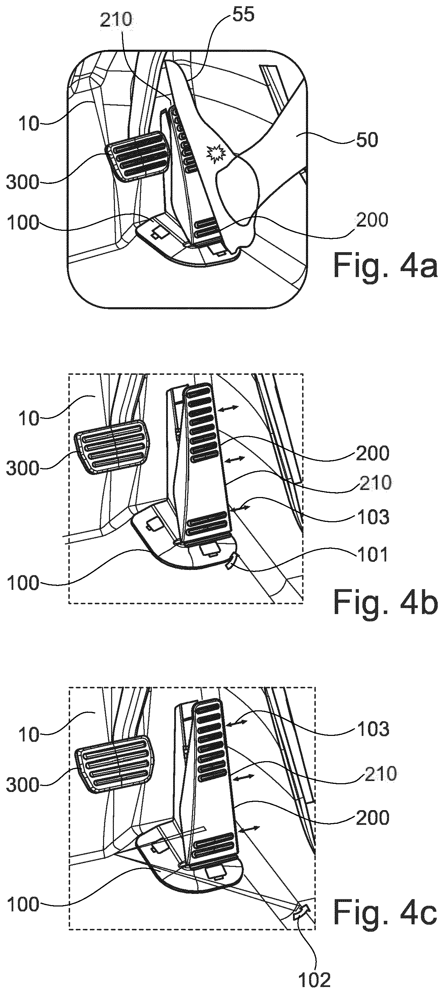

The protruding surface 115 may be configured to support an accelerator pedal 210, as shown in Fig. 4a to Fig. 5a, of the vehicle 10.

The protruding surface 115 may be designed to be in a substantially rectangular form, which may correspond to the bottom surface of an accelerator pedal 210. The deformation zone 111a for the deformation element is arranged in a zone in one of the corners of the protruding surface 115. Alternatively, the deformation zone 111a may be arranged in the center zone of the protruding surface 115.

The deformation element 111, may be configured to be deformed during the crash and to lift the accelerator pedal 210 up by a predefined height 101. For example, the defined height 101 may be 1 mm to 2 mm.

By deforming the deformation element 111 of the first bracket portion 110 of the accelerator pedal bracket assembly 100, the high initial pulse of the collision, which may be around 3500 N on the foot 55 may be absorbed or brought down to a lower level and the injury caused by the crash may be prevented or at least kept at a minimum. Furthermore, by deforming the deformation element 111, the damage of the accelerator pedal 210 may be minimized and the accelerator pedal 210 may not fall into loose parts.

Moreover, the deformation element 111 may be cost-efficiently formed on the protruding surface 115 of the pedal bracket without modifying the accelerator pedal 210 itself.

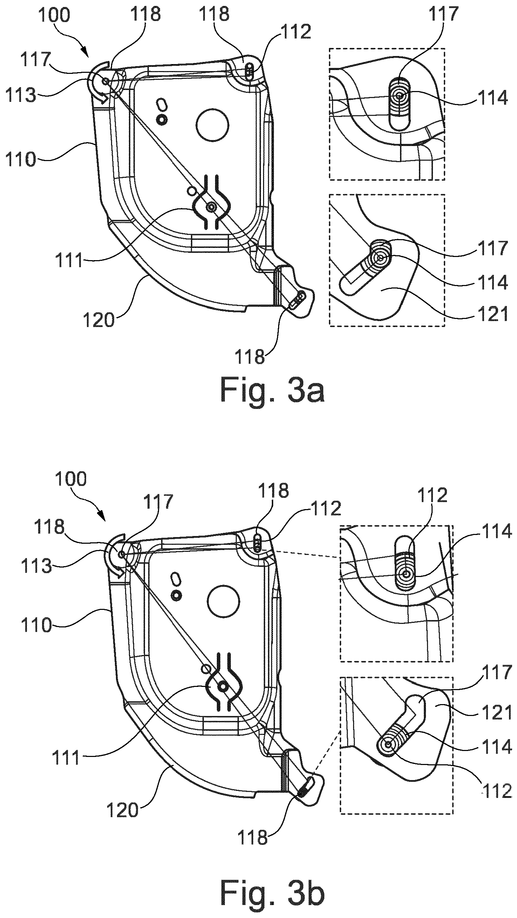

The first bracket portion 110 of the accelerator pedal bracket assembly 100 further comprises a base 116, which comprises at least one through hole 117. The at least one through hole 117 may be configured to secure the accelerator pedal 210 to a floor pedal of vehicle 10 by means of at least one fixing element as shown in Fig. 3a and Fig. 3b, such as at least one screw or at least one pin. In Fig. 1, two through holes 117 are provided, respectively, in the two corners of the first bracket portion 110 to allow the accelerator pedal 210 being fixed to the floor panel of the vehicle 10.

The second bracket portion 120 of the accelerator pedal bracket assembly 100 comprises an extending portion 121 and the through hole 117 that is arranged in the extending portion 121.

The second bracket portion 120 may be secured to the first bracket portion 110. For example, the second bracket portion 120 and the first bracket portion 110 may be designed to be one piece, so that the second bracket portion 120 and the first bracket portion 110 may be movable as a whole during the crash.

Alternatively, the second bracket portion 120 may be designed to be at least partially overlaid by the first bracket portion 110, so that only the first bracket portion 110 may be movable during the crash.

In contrast to the accelerator pedal bracket assembly 100 of Fig. 1, the base 116 of the first bracket portion 110 of the accelerator pedal bracket assembly 100 in Fig. 2 further comprises at least one retention element 118, which are arranged at the at least one through hole 117. As shown in Fig. 2, two retention elements 118 are provided, respectively, at the two through holes 117 of the base 116 of the first bracket portion 110. Additionally, a further retention element 118 is arranged at the through hole 117 of the second bracket portion 120.

The at least one retention element 118 may comprise at least one sliding slot 112 that may elongate or extend the at least one through hole 117. For example, in Fig. 2, three sliding slots 112 are provided, respectively, at the three corresponding retention elements 117. As the second bracket portion 120 may be secured to the first bracket portion 110 or formed as an integral piece with the first bracket portion 110, the sliding slots 112 may be configured to allow the respective fixing elements 114 to slide from the respective through holes 117 into the sliding slots 112 during the crash.

All three sliding slots 112 are designed to elongate the respective through holes 117 in the same direction, namely a first direction. In this way, the retention elements 118 may be configured to elongate the through holes 117 in parallel to each other. Accordingly, the sliding slots may be configured to allow the fixing elements 114 to slide or move from the through holes 117 into the sliding slots 112 in the same first direction, so that the bracket assembly 100 may be moved translationally as a whole piece from a first position to a second position.

Alternatively, the two retention elements 118 of the first bracket portion 110 may be configured to elongate the through holes 117 antiparallel to each other. If the first bracket portion 110 is designed to be movable independently from the second bracket portion 120, the sliding slots 112 of the first bracket portion 110 may be configured to allow the respective fixing elements 114 to slide or move in opposite directions. Accordingly, the first bracket portion 110 may twist or pivot by a predefined angle 102, e.g. as shown in Fig. 4c, by a predefined angle during the crash.

Alternatively, the at least one retention element 118 may further comprise at least one pivot element 113, which may be configured to pivot about the at least one through hole 117 by a predefined angle 102 during the crash.

Fig. 3a and Fig. 3b show, respectively, that the retention elements 118 of the first bracket portion 110 may comprise a sliding slot 112 at one of the two through holes 117 and a pivot element 113 at the other of the two through holes 117. The retention element 118 of the second bracket portion may, for example, be a sliding slot 112. Since the pivot element 113 may be configured to pivot about the respective though hole 117, for example counterclockwise, by a predefined angle 102 during the crash. Accordingly, by the crash, the sliding slot 112 of the first bracket portion 110 and the sliding slot 112 of the second bracket portion 120 may allow the respective fixing elements 114 to slide from the respective through holes 117 into the sliding slots 112. Simultaneously, the pivot element 113 may pivot counterclockwise by the predefined angle and the first bracket portion 110 may twist by the corresponding predefined angle 102. The counterclockwise pivot direction may ensure that the accelerator pedal 210 and the foot 55 placed thereon may twist from a first position to a second position, so that the foot 55 during the crash may not be further injured by a brake pedal 300 as shown in Fig. 4a to Fig. 4c that is typically provided on the left side of the accelerator pedal 210.

In Fig. 3a and Fig. 3b, the sliding slot 112 of the second bracket portion 120 may elongate the respective through hole 117 in a second direction that may differ from the first elongation direction of the sliding slot 112 of the first bracket portion 110. The second bracket portion 120 may be secured to the first bracket portion so that the pedal bracket 100 may twist as a whole piece.

Since the pedal bracket assembly may allow the accelerator pedal 210 and the foot 55 placed thereon to slide, rotate or twist from the first position into the second position during the crash, in addition to being lifted up by the deformation element 111, the crash force or the crash pulse on the accelerator pedal 210 and the foot 55 may further be absorbed and reduced and the extent of the foot injury of the driver may thus be further minimized.

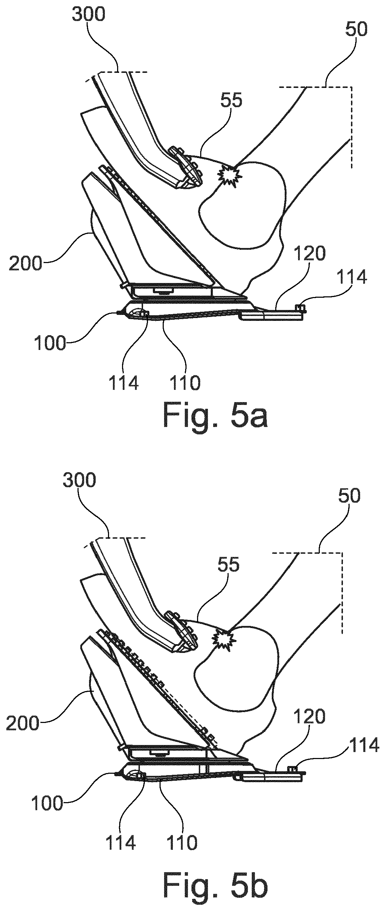

Fig. 4a to Fig. 4c and Fig. 5a to Fig. 5c show, respectively, an accelerating pedal assembly 200 for protecting a driver 50 during a crash in a perspective view and a side view.

The accelerating pedal assembly 200 comprises an accelerator pedal 210, which is arranged on the right side to a brake pedal 300 and on which the foot 55 of the driver 50 may be placed, and an accelerator pedal bracket assembly 100 which is shown in Fig. 1 to Fig. 3 for example.

The accelerator pedal bracket assembly 100 may be configured to secure the accelerator pedal 210 to a floor panel of the vehicle 10 by means of at least one fixing element 114, so that the accelerator pedal 210 may be designed to be a flexible hanging pedal 210. The fixing elements 114 may be provided at the through holes 117 of the accelerator pedal bracket assembly 100.

The accelerator pedal bracket assembly 100 may comprise a deformation element 111 which may be configured to allow the accelerator pedal 210 and the foot 55 thereon being lifted up by a predefined height 101, as shown in Fig. 4b, and/or at least one retention element 118 which may be configured to allow the accelerator pedal 210 and the foot twisting by a predefined angle 102, as shown in Fig. 4c.

The accelerator pedal bracket assembly 100, the accelerator pedal 210 and the foot 55 may twist from a first position to a second position where the foot 55 may be distant to the side panel of the vehicle with a predefined distance 103, as shown in Fig. 4b and Fig. 5b, so that the foot 55 may be prevented from a further injury caused by the side panel during the crash. A maximum predefined distance 103 between the accelerator pedal 210 and the side panel may prevent the foot 55 from slipping off the accelerator pedal 210 at the right side of the accelerator pedal 210. Moreover, the accelerator pedal 210 may twist to guide the foot 55 to the right side of the accelerator pedal 210, in order to prevent the foot 55 to slip off the accelerator pedal 210 at the left side of the accelerator pedal 210.

Fig. 6 shows that the vehicle 10 comprises an accelerating pedal assembly 200 according to the present disclosure. The accelerating pedal assembly 200 may comprise an accelerator pedal bracket assembly 100 according to the present disclosure and a processing element 80, which may be designed to execute a computer program element for the vehicle 10 for performing method steps as shown in Fig. 7.

Fig. 7 shows a flow chart illustrating a method for protecting a driver 50 during a crash for a vehicle 10 by means of an accelerator pedal bracket assembly 100. The method starts at step 710 where a first bracket portion 110 comprising a deformation element 111 and a protruding surface 115 may be provided and an accelerator pedal 210 may be supported by means of the protruding surface 115. At a subsequent step 720, the deformation element 111, which is arranged in a deformation zone 111a on the protruding surface 115, may be deformed during the crash, in order to lift the accelerator pedal 210 up by a predefined height 101. Finally, at step 730, the first bracket portion 110 may be able to slide or twist during the crash by means of at least one retention element 118 that may comprise at least one sliding slot 112 and/or at least one pivot element 113.

Other variations to the disclosed examples can be understood and effected by those skilled in the art within the scope of the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 50: driver
- 55: foot of driver
- 80: processing element
- 100: accelerator pedal bracket assembly
- 101: predefined height
- 102: predefined angle
- 110: first bracket portion
- 111: deformation element
- 111a: deformation zone
- 112: sliding slot
- 113: pivot element
- 114: fixing element
- 115: protruding surface
- 116: base
- 117: through hole
- 118: retention element
- 120: second bracket portion
- 121: extending portion
- 200: accelerating pedal assembly
- 210: accelerator pedal
- 300: brake pedal
- 710: step of providing first bracket portion
- 720: step of deforming deformation element
- 730: step of sliding or twisting first bracket portion

## Claims

1. An accelerator pedal bracket assembly (100) for a vehicle (10) for protecting a driver (50) during a crash, comprising:
a first bracket portion (110) comprising
a deformation element (111),
a protruding surface (115), and
a base (116);
the protruding surface (115) being configured to support an accelerator pedal (210);
the deformation element (111) being arranged in a deformation zone on the protruding surface (115);
the deformation element (111) being configured to be deformed during the crash and lifting the accelerator pedal (210) up by a predefined height (101);
**characterized in that** the base (116) comprising:
at least one through hole (117), the at least one through hole being configured to secure the accelerator pedal (210) to a floor panel of the vehicle (10) by means of at least one fixing element (114), and
at least one retention element (118), the at least one retention element (118) being arranged at the at least one through hole (117).

2. The accelerator pedal bracket assembly (100) according to claim 1,
the at least one retention element (118) comprising at least one sliding slot (112);
the at least one sliding slot (112) being configured to elongate the at least one through hole (117) in a first direction; and
the at least one sliding slot (112) being configured to allow the at least one fixing element (114) sliding from the at least one through hole (117) into the at least one sliding slot (112) during the crash.

3. The accelerator pedal bracket assembly (100) according to claim 2,
the at least one retention element (118) being configured to elongate the at least one through hole (117) in parallel to each other; and
the at least one sliding slot (112) being configured to allow the at least one fixing element (114) sliding from the at least one through hole (117) into the at least one sliding slot (112) in the same first direction during the crash.

4. The accelerator pedal bracket assembly (100) according to claim 1 or 2,
the at least one retention element (118) being configured to elongate the at least one through hole (117) antiparallel to each other; and
the at least one sliding slot (112) being configured to allow the at least one sliding slot (112) sliding in opposite directions and thereby to allow the first bracket portion (110) twisting by a predefined angle (102) during the crash.

5. The accelerator pedal bracket assembly (100) according to one of the claims 1 to 3,
the at least one retention element (118) further comprising at least one pivot element (113);
the at least one pivot element (113) being configured to pivot about the at least one through hole (117) by the predefined angle (102) during the crash.

6. The accelerator pedal bracket assembly (100) according to claim 5,
the at least one retention element (118) being configured to allow the sliding slot (112) sliding into the sliding slot (112) during the crash; and
the at least one retention element (118) being configured to allow the pivot element (113) pivoting by the predefined angle (102) and thereby allow the first bracket portion (110) twisting by the predefined angle (102) during the crash.

7. The accelerator pedal bracket assembly (100) according to one of the preceding claims,
the predefined height (101) being 1 mm to 2 mm.

8. The accelerator pedal bracket assembly (100) according to one of the preceding claims, further comprising:
a second bracket portion (120);
the second bracket portion (120) comprising the through hole (117) and being configured to be at least partially overlaid by the first bracket portion (110).

9. The accelerator pedal bracket assembly (100) according to claim 8,
the second bracket portion (120) being secured to the first bracket portion (110); and/or
the second bracket portion (120) and the first bracket portion (110) being designed to be one piece.

10. The accelerator pedal bracket assembly (100) according to claim 8,
the second bracket portion (120) further comprising the retention element (118), the retention element (118) of the second bracket portion (120) being the sliding slot (112);
the sliding slot (112) of the second bracket portion (120) being configured to elongate the through hole (117) of the second bracket portion (120) in parallel to the at least one retention element (118) of the first bracket portion (110), and thereby to allow the fixing element (114) of the second bracket portion (120) sliding from the through hole (117) into the sliding slot (112) in the same first direction as the at least one fixing element (114) of the first bracket portion (110) during the crash; or
the sliding slot (112) of the second bracket portion (120) being configured to elongate the through hole (117) of the second bracket portion (120) in a second direction different from the first direction, and to allow the fixing element (114) of the second bracket portion (120) sliding in the second direction, thereby to allow the second bracket portion (110) twisting by the predefined angle (102) when the first bracket portion (110) twisting by the predefined angle (102) during the crash.

11. An accelerating pedal assembly (200) for a vehicle (10) for protecting a driver (50) during a crash, comprising:
an accelerator pedal (210), and
an accelerator pedal bracket assembly (100) according to one of the preceding claims 1 to 10;
the accelerator pedal bracket assembly (100) being configured to secure the accelerator pedal (210) to a floor panel of the vehicle (10) and comprising a deformation element (111); and
the deformation element (111) being configured to be deformed during the crash, so that the accelerator pedal (200) and a foot (55) of the driver (50) are lifted up by a predefined height (101).

12. A vehicle (10) comprising an accelerating pedal assembly (200) according to claim 12, the accelerating pedal assembly (200) comprising an accelerator pedal bracket assembly (100) according to one of the preceding claims 1 to 10.

13. Use of an accelerator pedal bracket assembly (100) according to one of the preceding claims 1 to 10 for a vehicle (10) according to claim 12 for absorbing a crash impact and preventing a foot injury of a driver (50) during a crash.

14. A method for protecting a driver (50) during a crash for a vehicle (10) by means of an accelerator pedal bracket assembly (100) as defined in any of claims 1-10, the method comprising the steps of:
providing (710) a first bracket portion (110) comprising a deformation element (111) and a protruding surface (115) and supporting an accelerator pedal (210) by means of the protruding surface (115);
deforming (720) the deformation element (111) arranged in a deformation zone on the protruding surface during the crash, in order to lift the accelerator pedal (210) up by a predefined height (101); and
sliding or twisting (730) the first bracket portion (110) during the crash by means of at least one retention element (118), the retention element (118) comprising at least one sliding slot (112) and/or at least one pivot element (113).

## Patentansprüche

1. Gaspedalhalterungsbaugruppe (100) für ein Fahrzeug (10) zum Schützen eines Fahrers (50) während eines Aufpralls, die Folgendes umfasst:
einen ersten Halterungsabschnitt (110), der Folgendes umfasst
ein Deformationselement (111),
eine vorstehende Fläche (115), und
eine Basis (116);
wobei die vorstehende Fläche (115) dazu ausgelegt ist, ein Gaspedal (210) zu stützen;
wobei das Deformationselement (111) in einer Deformationszone auf der vorstehenden Fläche (115) angeordnet ist;
wobei das Deformationselement (111) dazu ausgelegt ist, während des Aufpralls deformiert zu werden, und das Gaspedal (210) um eine vordefinierte Höhe (101) nach oben anhebt;
**dadurch gekennzeichnet, dass** die Basis (116) Folgendes umfasst:
mindestens ein Durchgangsloch (117), wobei das mindestens eine Durchgangsloch dazu ausgelegt ist, das Gaspedal (210) mittels mindestens eines Befestigungselements (114) an einer Bodenplatte des Fahrzeugs (10) zu befestigen, und
mindestens ein Rückhalteelement (118), wobei das mindestens eine Rückhalteelement (118) an dem mindestens einen Durchgangsloch (117) angeordnet ist.

2. Gaspedalhalterungsbaugruppe (100) nach Anspruch 1, wobei das mindestens eine Rückhalteelement (118) mindestens einen Verschiebeschlitz (112) umfasst;
wobei der mindestens eine Verschiebeschlitz (112) dazu ausgelegt ist, das mindestens eine Durchgangsloch (117) in einer ersten Richtung zu verlängern; und
wobei der mindestens eine Verschiebeschlitz (112) dazu ausgelegt ist, zu ermöglichen, dass sich das mindestens eine Befestigungselement (114) während des Aufpralls von dem mindestens einen Durchgangsloch (117) in den mindestens einen Verschiebeschlitz (112) verschiebt.

3. Gaspedalhalterungsbaugruppe (100) nach Anspruch 2, wobei das mindestens eine Rückhalteelement (118) dazu ausgelegt ist, das mindestens eine Durchgangsloch (117) parallel zueinander zu verlängern; und
wobei der mindestens eine Verschiebeschlitz (112) dazu ausgelegt ist, zu ermöglichen, dass sich das mindestens eine Befestigungselement (114) während des Aufpralls in der gleichen ersten Richtung von dem mindestens einen Durchgangsloch (117) in den mindestens einen Verschiebeschlitz (112) verschiebt.

4. Gaspedalhalterungsbaugruppe (100) nach Anspruch 1 oder 2,
wobei das mindestens eine Rückhalteelement (118) dazu ausgelegt ist, das mindestens eine Durchgangsloch (117) antiparallel zueinander zu verlängern; und
wobei der mindestens eine Verschiebeschlitz (112) dazu ausgelegt ist, zu ermöglichen, dass sich der mindestens eine Verschiebeschlitz (112) in entgegengesetzten Richtungen verschiebt, und dadurch zu ermöglichen, dass sich der erste Halterungsabschnitt (110) während des Aufpralls um einen vordefinierten Winkel (102) verdreht.

5. Gaspedalhalterungsbaugruppe (100) nach einem der Ansprüche 1 bis 3,
wobei das mindestens eine Rückhalteelement (118) ferner mindestens ein Schwenkelement (113) umfasst;
wobei das mindestens eine Schwenkelement (113) dazu ausgelegt ist, während des Aufpralls um den vordefinierten Winkel (102) um das mindestens eine Durchgangsloch (117) zu schwenken.

6. Gaspedalhalterungsbaugruppe (100) nach Anspruch 5, wobei das mindestens eine Rückhalteelement (118) dazu ausgelegt ist, zu ermöglichen, dass der sich Verschiebeschlitz (112) während des Aufpralls in den Verschiebeschlitz (112) verschiebt; und
wobei das mindestens eine Rückhalteelement (118) dazu ausgelegt ist, zu ermöglichen, dass das Schwenkelement (113) um den vordefinierten Winkel (102) schwenkt, und dadurch zu ermöglichen, dass sich der erste Halterungsabschnitt (110) während des Aufpralls um den vordefinierten Winkel (102) verdreht.

7. Gaspedalhalterungsbaugruppe (100) nach einem der vorhergehenden Ansprüche,
wobei die vordefinierte Höhe (101) 1 mm bis 2 mm beträgt.

8. Gaspedalhalterungsbaugruppe (100) nach einem der vorhergehenden Ansprüche, die ferner Folgendes umfasst:
einen zweiten Halterungsabschnitt (120);
wobei der zweite Halterungsabschnitt (120) das Durchgangsloch (117) umfasst und dazu ausgelegt ist, zumindest teilweise von dem ersten Halterungsabschnitt (110) überlagert zu sein.

9. Gaspedalhalterungsbaugruppe (100) nach Anspruch 8, wobei der zweite Halterungsabschnitt (120) an dem ersten Halterungsabschnitt (110) befestigt ist; und/oder wobei der zweite Halterungsabschnitt (120) und der erste Halterungsabschnitt (110) einstückig ausgestaltet sind.

10. Gaspedalhalterungsbaugruppe (100) nach Anspruch 8, wobei der zweite Halterungsabschnitt (120) ferner das Rückhalteelement (118) umfasst, wobei das Rückhalteelement (118) des zweiten Halterungsabschnitts (120) der Verschiebeschlitz (112) ist;
wobei der Verschiebeschlitz (112) des zweiten Halterungsabschnitts (120) dazu ausgelegt ist, das Durchgangsloch (117) des zweiten Halterungsabschnitts (120) parallel zu dem mindestens einen Rückhalteelement (118) des ersten Halterungsabschnitts (110) zu verlängern, und dadurch zu ermöglichen, dass sich das Befestigungselement (114) des zweiten Halterungsabschnitts (120) während des Aufpralls in der gleichen ersten Richtung wie das mindestens eine Befestigungselement (114) des ersten Halterungsabschnitts (110) von dem Durchgangsloch (117) in den Verschiebeschlitz (112) verschiebt; oder
wobei der Verschiebeschlitz (112) des zweiten Halterungsabschnitts (120) dazu ausgelegt ist, das Durchgangsloch (117) des zweiten Halterungsabschnitts (120) in einer zweiten Richtung zu verlängern, die sich von der ersten Richtung unterscheidet, und zu ermöglichen, dass sich das Befestigungselement (114) des zweiten Halterungsabschnitts (120) in der zweiten Richtung verschiebt, wodurch ermöglicht wird, dass sich der zweite Halterungsabschnitt (110) um den vordefinierten Winkel (102) verdreht, wenn sich der erste Halterungsabschnitt (110) während des Aufpralls um den vordefinierten Winkel (102) verdreht.

11. Gaspedalbaugruppe (200) für ein Fahrzeug (10) zum Schützen eines Fahrers (50) während eines Aufpralls, die Folgendes umfasst:
ein Gaspedal (210), und
eine Gaspedalhalterungsbaugruppe (100) nach einem der vorhergehenden Ansprüche 1 bis 10;
wobei die Gaspedalhalterungsbaugruppe (100) dazu ausgelegt ist, das Gaspedal (210) an einer Bodenplatte des Fahrzeugs (10) zu befestigen, und ein Deformationselement (111) umfasst; und
wobei das Deformationselement (111) dazu ausgelegt ist, während des Aufpralls so deformiert zu werden, dass das Gaspedal (200) und ein Fuß (55) des Fahrers (50) um eine vordefinierte Höhe (101) angehoben werden.

12. Fahrzeug (10), das eine Gaspedalbaugruppe (200) nach Anspruch 12 umfasst, wobei die Gaspedalbaugruppe (200) eine Gaspedalhalterungsbaugruppe (100) nach einem der vorhergehenden Ansprüche 1 bis 10 umfasst.

13. Verwendung einer Gaspedalhalterungsbaugruppe (100) nach einem der vorhergehenden Ansprüche 1 bis 10 für ein Fahrzeug (10) nach Anspruch 12 zum Absorbieren einer Aufprallwirkung und Verhindern einer Fußverletzung eines Fahrers (50) während eines Aufpralls.

14. Verfahren zum Schützen eines Fahrers (50) während eines Aufpralls für ein Fahrzeug (10) mittels einer Gaspedalhalterungsbaugruppe (100) nach einem der Ansprüche 1-10, wobei das Verfahren die folgenden Schritte umfasst:
Bereitstellen (710) eines ersten Halterungsabschnitts (110), der ein Deformationselement (111) und eine vorstehende Fläche (115) umfasst, und Stützen eines Gaspedals (210) mittels der vorstehenden Fläche (115);
Deformieren (720) des in einer Deformationszone auf der vorstehenden Fläche angeordneten Deformationselements (111) während des Aufpralls, um das Gaspedal (210) um eine vordefinierte Höhe (101) nach oben anzuheben; und
Verschieben oder Verdrehen (730) des ersten Halterungsabschnitts (110) während des Aufpralls mittels mindestens eines Rückhalteelements (118), wobei das Rückhalteelement (118) mindestens einen Verschiebeschlitz (112) und/oder mindestens ein Schwenkelement (113) umfasst.

## Revendications

1. Ensemble support de pédale d'accélérateur (100) pour un véhicule (10) pour protéger un conducteur (50) durant une collision, comprenant :
une première partie de support (110) comprenant un élément de déformation (111),
une surface saillante (115), et
une base (116) ;
la surface saillante (115) étant configurée pour supporter une pédale d'accélérateur (210) ;
l'élément de déformation (111) étant agencé dans une zone de déformation sur la surface saillante (115) ;
l'élément de déformation (111) étant configuré pour être déformé durant la collision et levant la pédale d'accélérateur (210) vers le haut selon une hauteur prédéfinie (101) ;
**caractérisé en ce que** la base (116) comprend :
au moins un trou traversant (117), l'au moins un trou traversant étant configuré pour fixer la pédale d'accélérateur (210) à un panneau de plancher du véhicule (10) au moyen d'au moins un élément de fixation (114), et
au moins un élément de retenue (118), l'au moins un élément de retenue (118) étant agencé au niveau de l'au moins un trou traversant (117).

2. Ensemble support de pédale d'accélérateur (100) selon la revendication 1,
l'au moins un élément de retenue (118) comprenant au moins une fente de coulissement (112) ;
l'au moins une fente de coulissement (112) étant configurée pour allonger l'au moins un trou traversant (117) dans une première direction ; et
l'au moins une fente de coulissement (112) étant configurée pour permettre à l'au moins un élément de fixation (114) de coulisser depuis l'au moins un trou traversant (117) jusque dans l'au moins une fente de coulissement (112) durant la collision.

3. Ensemble support de pédale d'accélérateur (100) selon la revendication 2,
l'au moins un élément de retenue (118) étant configuré pour allonger l'au moins un trou traversant (117) en parallèle l'un à l'autre ; et
l'au moins une fente de coulissement (112) étant configurée pour permettre à l'au moins un élément de fixation (114) de coulisser depuis l'au moins un trou traversant (117) jusque dans l'au moins une fente de coulissement (112) dans la même première direction durant la collision.

4. Ensemble support de pédale d'accélérateur (100) selon la revendication 1 ou 2,
l'au moins un élément de retenue (118) étant configuré pour allonger l'au moins un trou traversant (117) antiparallèlement l'un à l'autre ; et
l'au moins une fente de coulissement (112) étant configurée pour permettre à l'au moins une fente de coulissement (112) de coulisser dans des directions opposée et ainsi pour permettre à la première partie de support (110) de se tordre selon un angle prédéfini (102) durant la collision.

5. Ensemble support de pédale d'accélérateur (100) selon l'une des revendications 1 à 3,
l'au moins un élément de retenue (118) comprenant en outre au moins un élément de pivotement (113) ;
l'au moins un élément de pivotement (113) étant configuré pour pivoter autour de l'au moins un trou traversant (117) selon l'angle prédéfini (102) durant la collision.

6. Ensemble support de pédale d'accélérateur (100) selon la revendication 5,
l'au moins un élément de retenue (118) étant configuré pour permettre à la fente de coulissement (112) de coulisser jusque dans la fente de coulissement (112) durant la collision ; et
l'au moins un élément de retenue (118) étant configuré pour permettre à l'élément de pivotement (113) de pivoter selon l'angle prédéfini (102) et ainsi permettre à la première partie de support (110) de se tordre selon l'angle prédéfini (102) durant la collision.

7. Ensemble support de pédale d'accélérateur (100) selon l'une des revendications précédentes,
la hauteur prédéfinie (101) étant de 1 mm à 2 mm.

8. Ensemble support de pédale d'accélérateur (100) selon l'une des revendications précédentes, comprenant en outre :
une seconde partie de support (120) ;
la seconde partie de support (120) comprenant le trou traversant (117) et étant configurée pour être au moins partiellement chevauchée par la première partie de support (110).

9. Ensemble support de pédale d'accélérateur (100) selon la revendication 8,
la seconde partie de support (120) étant fixée à la première partie de support (110) ; et/ou la seconde partie de support (120) et la première partie de support (110) étant conçues pour être monopièce.

10. Ensemble support de pédale d'accélérateur (100) selon la revendication 8,
la seconde partie de support (120) comprenant en outre l'élément de retenue (118), l'élément de retenue (118) de la seconde partie de support (120) étant la fente de coulissement (112) ;
la fente de coulissement (112) de la seconde partie de support (120) étant configurée pour allonger le trou traversant (117) de la seconde partie de support (120) en parallèle à l'au moins un élément de retenue (118) de la première partie de support (110), et ainsi pour permettre à l'élément de fixation (114) de la seconde partie de support (120) de coulisser depuis le trou traversant (117) jusque dans la fente de coulissement (112) dans la même première direction que l'au moins un élément de fixation (114) de la première partie de support (110) durant la collision ; ou
la fente de coulissement (112) de la seconde partie de support (120) étant configurée pour allonger le trou traversant (117) de la seconde partie de support (120) dans une seconde direction différente de la première direction, et pour permettre à l'élément de fixation (114) de la seconde partie de support (120) de coulisser dans la seconde direction, ainsi pour permettre à la seconde partie de support (110) de se tordre selon l'angle prédéfini (102) lorsque la première partie de support (110) se tord selon l'angle prédéfini (102) durant la collision.

11. Ensemble à pédale d'accélération (200) pour un véhicule (10) pour protéger un conducteur (50) durant une collision, comprenant :
une pédale d'accélérateur (210), et
un ensemble support de pédale d'accélérateur (100) selon l'une des revendications précédentes 1 à 10 ;
l'ensemble support de pédale d'accélérateur (100) étant configuré pour fixer la pédale d'accélérateur (210) à un panneau de plancher du véhicule (10) et comprenant un élément de déformation (111) ; et
l'élément de déformation (111) étant configuré pour être déformé durant la collision, de telle sorte que la pédale d'accélérateur (200) et un pied (55) du conducteur (50) sont levés selon une hauteur prédéfinie (101).

12. Véhicule (10) comprenant un ensemble à pédale d'accélération (200) selon la revendication 12, l'ensemble à pédale d'accélération (200) comprenant un ensemble support de pédale d'accélérateur (100) selon l'une des revendications précédentes 1 à 10.

13. Utilisation d'un ensemble support de pédale d'accélérateur (100) selon l'une des revendications précédentes 1 à 10 pour un véhicule (10) selon la revendication 12 pour absorber un impact de collision et empêcher une blessure du pied d'un conducteur (50) durant une collision.

14. Procédé pour protéger un conducteur (50) durant une collision pour un véhicule (10) au moyen d'un ensemble support de pédale d'accélérateur (100) tel que défini dans de quelconques des revendications 1 à 10, le procédé comprenant les étapes suivantes :
la fourniture (710) d'une première partie de support (110) comprenant un élément de déformation (111) et une surface saillante (115) et supportant une pédale d'accélérateur (210) au moyen de la surface saillante (115) ;
la déformation (720) de l'élément de déformation (111) agencé dans une zone de déformation sur la surface saillante durant la collision, afin de lever la pédale d'accélérateur (210) vers le haut selon une hauteur prédéfinie (101) ; et
le coulissement ou la torsion (730) de la première partie de support (110) durant la collision au moyen d'au moins un élément de retenue (118), l'élément de retenue (118) comprenant au moins une fente de coulissement (112) et/ou au moins un élément de pivotement (113).
